# NEUE EUROPÄISCHE PATENTSCHRIFT

(11) **EP 2 444 234 B2**
(45) Veröffentlichungstag und Bekanntmachung des Hinweises auf die Entscheidung über den Einspruch: **25.11.2020**
(45) Hinweis auf die Patenterteilung: 13.09.2017
(21) Anmeldenummer: 11184968.3
(22) Anmeldetag: 13.10.2011
(51) Int. Cl.: B29C 49/64, B29C 49/68, B29B 13/02, B29C 49/06, B29C 49/12, B29C 35/08

(54) **Heizvorrichtung zur Temperierung von Vorformlingen**
Heating device for tempering pre-forms
Dispositif de chauffage pour la thermorégulation d'ébauches

(30) Priorität: 22.10.2010 DE 102010049136
(43) Veröffentlichungstag der Anmeldung: 25.04.2012
(73) Patentinhaber: Krones AG, 93073 Neutraubling (DE)
(72) Erfinder: Schönberger, Wolfgang, 93073 Neutraubling (DE); Fischer, Simon, 93073 Neutraubling (DE); Wutz, Andreas, 93073 Neutraubling (DE); Hirdina, Jochen, 93073 Neutraubling (DE); Holzer, Christian, 93073 Neutraubling (DE)
(74) Vertreter: Grünecker Patent- und Rechtsanwälte PartG mbB

(56) Entgegenhaltungen:
- WO-A1-2006/002751
- WO-A1-2011/036593
- DE-A1- 3 510 241
- DE-A1- 3 519 498
- DE-A1- 10 051 641
- DE-A1- 10 058 950
- DE-A1- 10 141 639
- DE-A1- 10 145 650
- DE-A1- 19 724 621
- DE-A1-102004 005 917
- DE-A1-102007 031 771
- DE-A1-102009 008 318
- US-A- 3 727 601
- US-B1- 6 242 717
- US-B1- 6 361 301
- US-B1- 6 632 087

## Beschreibung

Die vorliegende Erfindung betrifft eine Heizvorrichtung zur Erwärmung von Vorformlingen mit den Merkmalen des Oberbegriffes von Anspruch 1.

Bei der Herstellung von Kunststoffflaschen werden so genannte Vorformlinge aus thermoplastischem Material, beispielsweise aus PET, verwendet. Diese Vorformlinge werden erwärmt und in Streckblasmaschinen in die gewünschte Behälterform gebracht. Insbesondere werden die Vorformlinge in einer Förderstrecke durch eine Heizeinrichtung gefördert, ehe sie in der Blasstation verarbeitet werden.

Jeder Vorformling ist bereits mit einem oben offenen Mündungsbereich sowie in der Regel mit einem am Mündungsbereich angebrachten Außengewinde ausgebildet. Dieser Mündungsbereich entspricht im Wesentlichen dem Mündungsbereich der fertigen Flasche. Die Vorformlinge sind üblicherweise Spritzgussteile, die in der Heizeinrichtung auf die benötigte Umformtemperatur und anschließend in der Blasvorrichtung in die endgültige Form der Behälter beziehungsweise Flaschen gebracht werden.

An der außenliegenden Seite der geraden Längsseiten der Heizvorrichtung befinden sich die in Heizkästen angeordneten Heizeinrichtungen, die dem Vorformling mittels IR-Strahlung Wärme zuführen. An der Innenseite und am Boden der Heizkästen sind normalerweise Reflektoren angebracht, um die ausgestrahlte IR-Strahlung möglichst gut auszunutzen und in gewünschter Weise auf die zu erwärmenden Vorformlinge umzulenken.

Weiterhin wird der Mündungsbereich der Vorformlinge bei den meisten bekannten Anlagen durch einen Luftstrom vor zu großer Erwärmung geschützt. Dies ist notwendig, da bei zu großer Erwärmung der Mündungsbereich der Vorformlinge im nachfolgenden Blasformverfahren deformiert werden könnte, wodurch die dabei entstehenden Behälter als fehlerhaft ausgesondert werden müssten.

Weiterhin muss die Oberfläche der Vorformlinge vor Verbrennung durch zu starke lokale Erhitzung geschützt werden. Dies geschieht beispielsweise durch Lufteinblasung über Schlitze in den der Heizeinrichtung gegenüberliegenden Reflektoren.

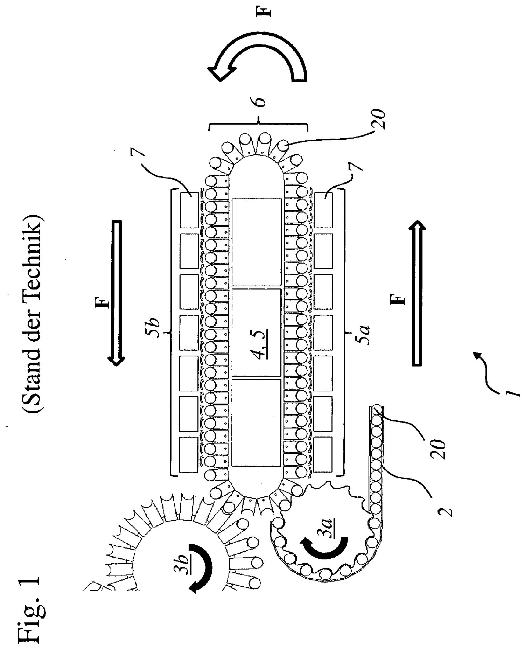

Eine schematische Ansicht einer Heizvorrichtung 1 zur Erwärmung von Vorformlingen 20 gemäß dem Stand der Technik ist in Figur 1 dargestellt. Die Vorformlinge 20 werden über ein Transportmittel 2 angeliefert, mittels eines Sägezahnsterns 3a auf Teilung gebracht und in den Ofen bzw. das Heizmodul 4 eingegeben und durchlaufen anschließend die Heizstrecke 5 in Förderbewegung F.

Im Ofen 4 durchlaufen die Vorformlinge 20 zunächst eine erste lineare Heizstrecke 5a, in der sie am Umfang gleichmäßig erwärmt werden. Nach einem Umlenkbereich 6 an einem Ende des Ofens 4 werden die Vorformlinge 20 auf einer zweiten geraden Heizstrecke 5b weitergeführt und auf endgültige Temperatur gebracht, bevor diese Vorformlinge 20 in einer Streckblasmaschine (nicht dargestellt) in die gewünschte Behälterform gebracht werden. In den geraden Bereichen 5a, 5b der Heizstrecke 5 sind mehrere Heizkästen 7 angebracht, in denen sich IR-Strahler (nicht dargestellt) und zusätzliche Reflektoren (nicht dargestellt) befinden.

Die Reflektoren (nicht dargestellt) sind notwendig, um Strahlungsverluste so gering wie möglich zu halten. Somit wird die von den Heizstrahlern abgegebene Strahlung, die nicht in die Vorformlinge 20 eingeht, von den Reflektoren zurückgeworfen und geht nicht verloren.

Während die Vorformlinge 20 den Ofen 4 durchlaufen, werden sie vorzugsweise gedreht, um eine gleichmäßige Erwärmung von allen Seiten zu gewährleisten. Anschließend werden die erwärmten Vorformlinge 20 beispielsweise an einen Auslaufstern 3b übergeben und einem Streckblasmodul o.ä. (nicht dargestellt) zugeführt.

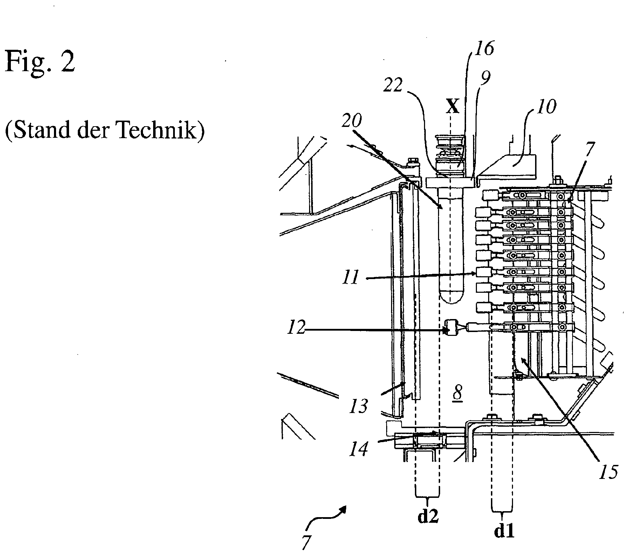

Figur 2 zeigt einen Heizkasten 7 gemäß dem Stand der Technik zur Verwendung in einer Heizvorrichtung gemäß Figur 1. Insbesondere ist eine Heizgasse 8 mit Heizkasten 7 aus einem linearen Bereich 5a, 5b des Heizmoduls 4,5 (vgl. Figur 1) dargestellt. Der an einer Halterung 16 gehalterte Vorformling 20 wird vorzugsweise drehend durch eine Heizgasse 8 transportiert. Damit der Vorformling 20 im Mündungsbereich 22 nicht zu heiß wird, muss dieser durch eine Abschirmplatte 9 vor direkter Strahlung abgeschirmt werden. Weiterhin ist in diesem Bereich ein äußeres Kühlschild 10 angeordnet, welches dazu dient, dass die Strahlerwärme, die nach oben in Richtung der Mündung 22 abgestrahlt wird, von dieser abzuschirmen.

In einer Heizgasse 8 sind IR- Strahler 11 in einer Reihe übereinander parallel zur Längsachse X des Vorformlings 20 angeordnet, so dass der Vorformling 20 über seine gesamte Höhe bestrahlt und erwärmt wird. Dabei bezieht sich parallel auf eine Ebene, in der die Mehrzahl von Heizstrahlern 11 angeordnet sind. Eine Längsachse jedes einzelnen stabförmig ausgeprägten Heizstrahlers 11 ist senkrecht zur Längsachse X des Vorformlings 20 ausgerichtet. Durch eine für jeden Heizstrahler 11 separat steuerbare Beaufschlagung mit insbesondere elektrischer Leistung kann ein Temperaturprofil auf den Vorformling 20 in seiner Längsachse X aufgebracht werden. Die Strahler 11 weisen somit alle denselben Abstand zur Längsachse X des Vorformlings 20 auf. Weiterhin ist ein Bodenstrahler 12 im unteren Bereich der Heizgasse 8 angeordnet, der den Vorformling 20 von unten her anstrahlt und erwärmt.

Um die Strahlung der Heizstrahler 11, 12 optimal auszunutzen, sind in der Heizgasse 8 Reflektoren angeordnet, insbesondere ein Gegenreflektor 13, auf der hinter dem Vorformling 20 den Strahlern 11 gegenüberliegenden Seite, ein Bodenreflektor 14 und ein Rückenreflektor 15, der hinter den Strahlern 11 angeordnet ist und somit die Strahlung zurückwirft, die ansonsten für die Erwärmung der Vorformlinge 20 nicht genutzt werden könnte.

Um zu verhindern, dass der Rückenreflektor 15 aufgrund der hohen Temperaturschwankungen in der Heizgasse 8 Schaden nimmt, ist es notwendig, einen gewissen Abstand d1 zwischen dem Rückenreflektor 15 und den IR- Strahlern 11 nicht zu unterschreiten.

EP1 278 619 B1 beschreibt eine Heizanordnung mit länglichen Erhitzern, wobei jedem Erhitzer ein einzelner Reflektor zugeordnet ist, der aufgrund seiner Parabolstruktur die Strahlungsstrahlen generell parallel zueinander reflektiert und so für eine kontrollierte Erwärmung der transportierten Vorformlinge sorgt.

DE 100 58 950 B4 zeigt eine Erwärmungsstrecke für Vorformlinge mit langgestreckten Halogenstrahlungsquellen, wobei die um den Vorformling herum angeordneten Reflektoren einen im wesentlichen geschlossenen Strahlungsraum bilden. DE-A-3510241 offenbart eine Heizvorrichtung gemäß dem Oberbegriff des Anspruchs 1. Bei den im Heiztunnel verwendeten hohen Prozesstemperaturen und den dabei auftretenden Temperaturschwankungen werden hohe Anforderungen an die verwendeten Materialien gestellt. Aus diesem Grund werden beispielsweise für die Reflektoren Materialien mit vorteilhaften Eigenschaften hinsichtlich Temperaturbeständigkeit, Temperaturwechselbeständigkeit, Strahlungs-reflexion, Wärmeleitfähigkeit usw. verwendet.

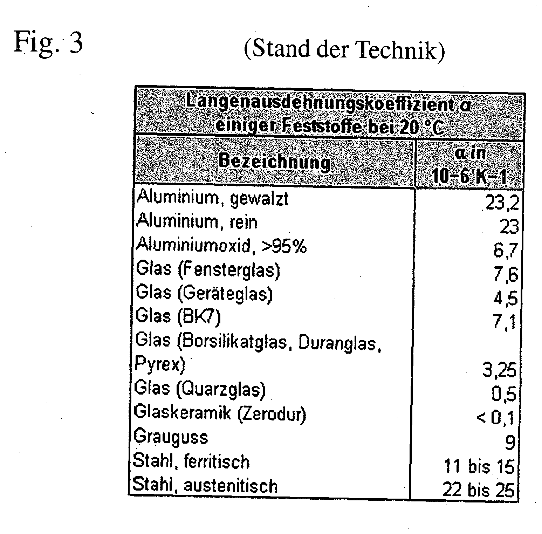

Sehr gute Eigenschaften weisen hier meist Keramiken und Gläser auf. Diese zeichnen sich durch ihre geringe Wärmeausdehnungskoeffizienten bzw. Längenausdehnungskoeffizienten aus, wodurch die Temperatur abhängige Längenausdehnung verhältnismäßig gering ist. Im Gegensatz hierzu weisen typische metallische Werkstoffe einen deutlich höheren Wärmeausdehnungskoeffizienten und dadurch auch eine höhere Längenausdehnungen auf. In Figur 3 sind beispielhaft die Längenausdehnungskoeffizienten verschiedener Materialien bei 20°C tabellarisch aufgelistet.

Durch ständig steigende Energiepreise wird ein möglichst hoher Wirkungsgrad von Maschinen und Anlagen immer wichtiger. Die Aufgabe der Erfindung besteht in der Optimierung des Wirkungsgrades von Heizstrecken bzw. ähnlichen Heizvorrichtungen durch die Verwendung geeigneter Reflektoren.

Die Aufgabe der Erfindung wird durch eine Vorrichtung gelöst, die die Merkmale in dem Patentanspruch 1 umfasst. Weitere vorteilhafte Ausgestaltungen werden durch die Unteransprüche beschrieben.

Die Erfindung betrifft eine Heizvorrichtung zur Erwärmung von Vorformlingen vor der Verarbeitung in einer Streckblasvorrichtung. Die verwendeten Vorformlinge weisen einen Mündungsbereich und eine Längsachse auf. Die Heizvorrichtung umfasst eine Heizgasse mit Transportmitteln für die Bewegung der Vorformlinge entlang einer Transportstrecke. In der Heizgasse ist eine Mehrzahl von IR-Strahlern in einer Reihe übereinander parallel zur Längsachse des Vorformlings angeordnet. Die Strahler weisen also alle denselben Abstand zur Längsachse des bestrahlten Vorformlings auf. Die IR-Strahler dienen der Erwärmung der Vorformlinge. Um die Strahlung optimal auszunutzen ist den IR-Strahlern mindestens ein Rückenreflektor zugeordnet, der nach hinten abgestrahlte Strahlung in die Heizgasse reflektiert, so dass diese ebenfalls der Erwärmung der Vorformlinge dient.

Den IR- Strahlern kann weiterhin mindestens ein Filter zugeordnet sein, so dass nur Strahlung einer bestimmten Wellenlänge bzw. eines bestimmten Wellenlängenbereichs, in die Heizgasse eingebracht bzw. eingestrahlt wird. Bevorzugt dient dieser Filter zur Erzeugung von langwelliger Strahlung aus der von den IR-Strahlern abgestrahlten kurzwelligen Strahlung. Insbesondere kann jedem IR- Strahler ein Filter zugeordnet sein. In einer Heizgasse finden sehr starke Temperaturschwankungen statt, da durch die IR- Strahler Temperaturen von 800°C oder mehr erzeugt werden. Große Rückenreflektor- oder Filterkacheln bestehen meist aus einem keramischen Material, aus Glas, Glaskeramik, Quarzglas, aus beschichtetem Quarzglas o.ä. Dabei handelt es sich um relativ spröde Materialien. Bei hohen Temperaturschwankungen und/oder bei Belastungen durch Druck- und/oder Zugkräfte brechen sie deswegen leicht und müssen dann ausgetauscht werden, was einen Stillstand der Maschine und somit teuren Produktionsausfall bewirkt. Aufgrund des segmentierten Aufbaus kann der mindestens eine Rückenreflektor deutlich näher an den IR- Strahlern angeordnet werden ohne Schaden zu nehmen, insbesondere ohne zu zerbrechen.

Insbesondere sind die Einzelsegmente des mindestens einen Rückenreflektors und/oder des mindestens einen Filters über eine Nut- und Feder- Verbindung miteinander verbunden. Der Vorteil einer solchen Verbindung besteht darin, dass eine kontrollierte Längenausdehnung stattfindet. Aufgrund des formschlüssigen Ineinandergreifens von Nut und Feder entstehen hierbei auch keine Lücken, die einen Strahlungsverlust, bzw. im Falle eines segmentierten Filters, das Durchtreten von Strahlung ungewünschter Wellenlänge bewirken würden.

Im Allgemeinen sind der mindestens eine Rückenreflektor und/oder der mindestens eine Filter in der Heizgasse in einer Halterung angeordnet. Eine solche Halterung besteht beispielsweise aus einem Stahlblech oder sog. Edelstahl- bzw. Niroblech oder einem ähnlichen geeigneten Material und weist somit einen anderen Längenausdehnungskoeffizienten auf als der mindestens eine Rückenreflektor und/oder der mindestens eine Filter. Bei den in der Heizgasse auftretenden Temperaturschwankungen kann dies zu Druck bzw. Zug auf den mindestens einen Rückenreflektor und/oder den mindestens einen Filter führen, was wiederum bei Überschreiten der zulässigen Materialgrenzwerte zum Brechen derselben führen kann.

Herkömmlicherweise werden die Reflektoren und / oder Filter über Schraubverbindungen, Klebungen, Klemmung, Falzung, Nietverbindungen starr bzw. fest auf metallischen Werkstoffen als Befestigungs- oder Trägerelementen angeordnet und in der Heizgasse verbaut. Die unterschiedlichen Längenausdehnungen der verschiedenen Werkstoffe führen zu zusätzlichen bzw. erhöhten Spannungen in den Bauteilen. Da die als Reflektor verwendeten Materialien Glas oder Keramik eher spröde sind und wenig Druck- bzw. Zugbelastung aufnehmen können, führen wiederholte Temperaturschwankungen schnell zu Schäden am Reflektor, beispielsweise zur Zerstörung durch Bruch.

Gemäß der Erfindung ist der mindestens eine Rückenreflektor in einer so genannten schwimmenden Halterung bzw. Lagerung angeordnet. Dabei ist das keramische Material des Rückenreflektor vom Trägerelement, über das die Befestigung des Reflektors innerhalb der Heizgasse erfolgt, entkoppelt. Die schwimmende Halterung verhindert zusätzliche Belastungen des spröden Materials, aus dem der mindestens eine Rückenreflektor besteht und ermöglicht eine freie Bewegung bzw. Ausdehnung derselben in alle Richtungen.

In die schmalen Seitenflächen des Reflektors ist jeweils mindestens eine Aussparung eingearbeitet, in die jeweils mindestens ein Halteelement bzw. Tragelement eines Rahmens bzw. Trägerelementes greift. Diese Aussparung ist breiter und / oder tiefer als das eingreifende Rahmenelement. Insbesondere ist die Breite der Aussparung so gewählt, dass bei unterschiedlicher Ausdehnung des Reflektors und des Rahmens immer ein Luftspalt zwischen den Materialien des Reflektors und des Rahmens besteht. Weiterhin ist diese Aussparung auch tiefer als das eingreifende Halteelement des Rahmens, so dass auch in diesem Bereich immer eine freie Bewegung des jeweiligen Materials möglich ist. Bei dieser Konstruktion wird der Reflektor gegenüber dem Tragrahmen in ausreichender Genauigkeit gehalten, wobei keine zusätzlichen Spannungen aufgrund der Verwendung von unterschiedlichen Materialien entstehen, da in allen Raumrichtungen ein ausreichender Abstand besteht, der eine ungehinderte Ausdehnung der unterschiedlichen Materialien erlaubt. Erfindungsgemaß wird der mindestens eine Rückenreflektor - im Weiteren auch als Kachel bezeichnet - in einem steifen, verwindungsarmen Rahmen gehaltert. Ein solcher Rahmen dient insbesondere der thermischen Entkopplung zwischen Kachel und Rahmen, da der Rahmen in der Mitte materialfrei ist, d.h. eine Aussparung aufweist, so dass in diesem Bereich vom Rahmen her keine Ausdehnung bzw. Verformung erfolgen kann.

Bei der Herstellung der IR Strahler wird dieser als Glasrohr gezogen und mit Halogengas über eine Bohrung befüllt, welche anschließend verschlossen wird. An diesem so genannten Anspritzpunkt ist die Materialdicke des Strahlers erhöht. Um den Rückenreflektor möglichst nah am IR-Strahler zu platzieren, weist dieser im Bereich des Strahleranspritzpunktes eine Freilegung bzw. Nut auf. Gemäß einer alternativen Ausführungsform ist der Rückenreflektor in diesem Bereich segmentiert.

Durch den segmentierten Aufbau hält die Kachel größeren Temperaturschwankungen stand. Somit ist es möglich, dass der Abstand zwischen den IR- Strahlern und dem Rückenreflektor minimiert werden kann. Vorzugsweise beträgt der Abstand zwischen den IR-Strahlern und dem Rückenreflektor maximal 50 mm, bevorzugt maximal 10 mm und besonders bevorzugt maximal 5mm.

Weiterhin ist in einer beschriebenen Heizgasse mindestens ein Gegenreflektor angeordnet. Der Gegenreflektor befindet sich auf der den IR-Strahlern gegenüberliegenden Seite der Heizgasse, so dass der Vorformling zwischen den IR-Strahlern und dem mindestens einen Gegenreflektor bewegt wird. Auch eine Minimierung des Abstands zwischen Vorformling und Gegenreflektor führt zu einer deutlichen Verbesserung der Energieeffizienz, da die Strahlung besser auf den Vorformling zurück reflektiert werden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Heizstrecke (Stand der Technik).
Figur 2 zeigt einen Heizkasten zur Verwendung in einer Heizvorrichtung gemäß Figur 1 (Stand der Technik).
Figur 3 zeigt tabellarisch den Längenausdehnungskoeffizienten verschiedener Materialien bei 20°C.
Figur 4 zeigt einen Heizkasten zur Verwendung in einer Heizvorrichtung gemäß der vorliegenden Erfindung.
Figuren 5a/b zeigen einen Rückenreflektor gemäß dem Stand der Technik.
Figuren 6a/b zeigen einen Rückenreflektor mit einer Halterung.
Figuren 7a/b zeigen eine weitere Ausführungsform einer Halterung eines Rückenreflektors.
Figuren 8a/b zeigen eine weitere Ausführungsform eines Rückenreflektors in einer schwimmenden Halterung.
Figuren 9a/b zeigen die Temperaturverteilung an einem hinter einem Strahler angeordneten Reflektor entlang der Strahlerlängsachse (Stand der Technik).
Figur 10 zeigt die Anordnung mehrerer erfindungsgemäßer Reflektoren hinter einem Strahler.

Für gleiche oder gleich wirkende Elemente werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Vorrichtung ausgestaltet sein kann und stellen keine abschließende Begrenzung dar.

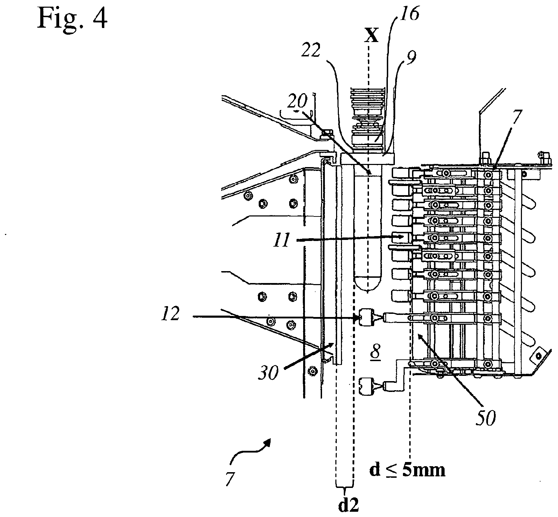

Figur 4 zeigt einen Heizkasten 7 zur Verwendung in einer Heizvorrichtung (nicht dargestellt) gemäß der vorliegenden Erfindung (vgl. auch Beschreibung zu Figur 2; s.o.). Gemäß der vorliegenden Offenbarung kann der Rückenreflektor 50 in sehr geringem Abstand d1 zu dem IR- Strahlern 11 angeordnet werden. Vorzugsweise beträgt der Abstand d1 maximal 5mm. Weiterhin wird der Abstand d2 zwischen dem Vorformling 20 und dem Gegenreflektor 30 verringert, was ebenfalls zu einer besseren Ausnutzung der IR- Strahlung führt.

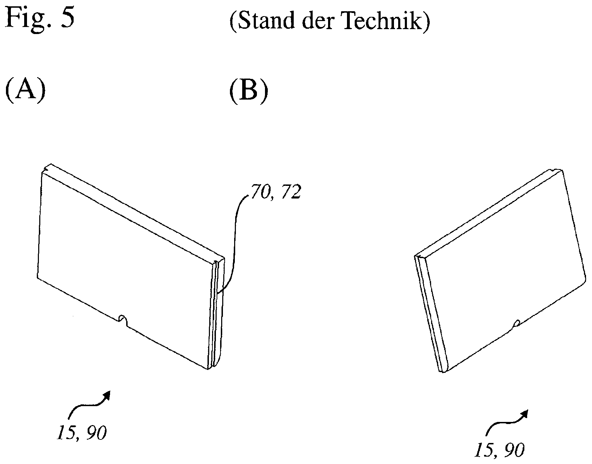

Figuren 5a/b zeigen zwei verschiedene Ansichten eines Rückenreflektors 15 gemäß dem Stand der Technik. Dieser besteht aus einer einzigen Kachel 90, beispielsweise aus keramischem Material, Glas, Glaskeramik, Quarzglas beschichtetem Quarzglas, poliertem Aluminiumblech oder einem anderen geeigneten Material. Der Rückenreflektor 15 weist vorzugsweise Montagevorrichtungen 70 zum erleichterten Befestigen und Auswechseln in einer Heizgasse (nicht dargestellt) auf. Dabei kann es sich beispielsweise um eine Einkerbung bzw. Nut 72 handeln, so dass der Rückenreflektor 15 beispielsweise in entsprechende korrespondierende Montageeinrichtungen (nicht dargestellt) in der Heizgasse eingeschoben werden kann.

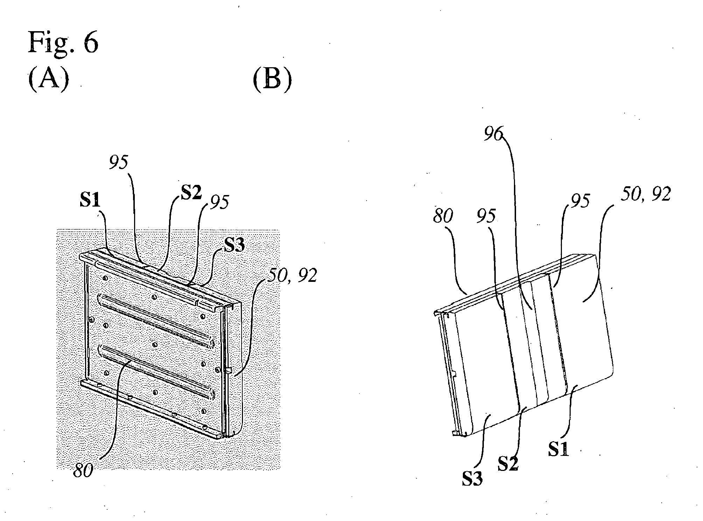

Figuren 6a/b zeigen einen Rückenreflektor 50 bzw. eine Kachel 92 in einer Halterung 80. Die Kachel 92 ist in drei Segmente S1, S2, S3 unterteilt. Die Segmente S1, S2, S3 sind über formschlüssige Nut- FederVerbindungen 95 miteinander verbunden. Beim Erhitzen der Kachel 92 findet eine kontrollierte Längenausdehnung statt. Aufgrund des formschlüssigen Ineinandergreifens von Nut und Feder entstehen hierbei jedoch keine Lücken, die einen Strahlungsverlust, bzw. im Falle eines segmentierten Filters, das Durchtreten von Strahlung ungewünschter Wellenlänge bewirken würde.

Die Halterung 80 dient insbesondere dem erleichterten Befestigen und Austauschen der Kachel 92 in der Heizgasse (nicht dargestellt), da an der Halterung 80 beispielsweise Montagevorrichtungen vorgesehen sein können.

Weiterhin weist die Kachel 92 eine Aussparung 96 auf. Diese ist so gewählt, dass nach Einbau der Kachel 92 in eine Heizgasse (nicht dargestellt) der ausgesparte Bereich 96 mit den Strahleranspritzpunkten der IR-Strahler (nicht dargestellt) korrespondiert. Dadurch ist es möglich, den Rückenreflektor 50 möglichst nah am IR-Strahler zu platzieren.

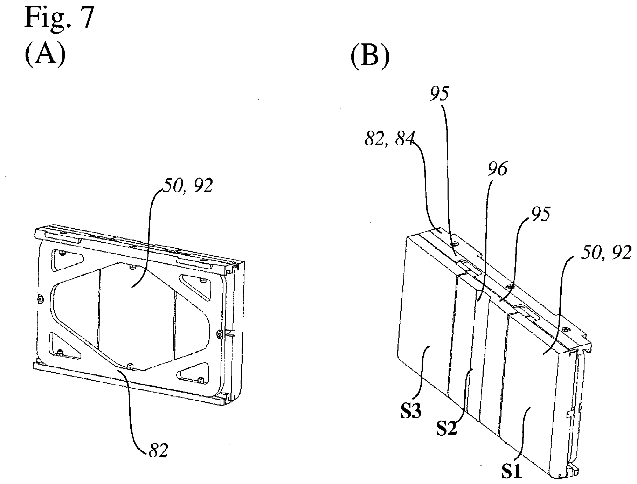

Figuren 7a/b zeigen eine weitere Ausführungsform einer Halterung 82 eines Rückenreflektors 50. Der Aufbau der Kachel 92 entspricht dem in Figur 5a/b.

Die Halterung 82 besteht beispielsweise aus einem Stahl- oder Niroblech oder einem ähnlichen geeigneten Material und ist als so genannte schwimmende Halterung ausgeführt. Die schwimmende Halterung 82 verhindert zusätzliche Belastungen des spröden Materials der Kachel 92 und ermöglicht eine freie Bewegung bzw. Ausdehnung derselben in alle Richtungen.

Die Halterung 82 ist vorzugsweise als steifer, verwindungsarmer Rahmen 84 ausgeführt. Der Rahmen 84 dient insbesondere der thermischen Entkopplung zwischen Kachel 92 und Rahmen 84, da der Rahmen 84 in der Mitte materialfrei ist, so dass in diesem Bereich vom Rahmen 84 her keine Ausdehnung bzw. Verformung erfolgen und somit kein Zug oder Druck auf die Kachel 92 erfolgen kann.

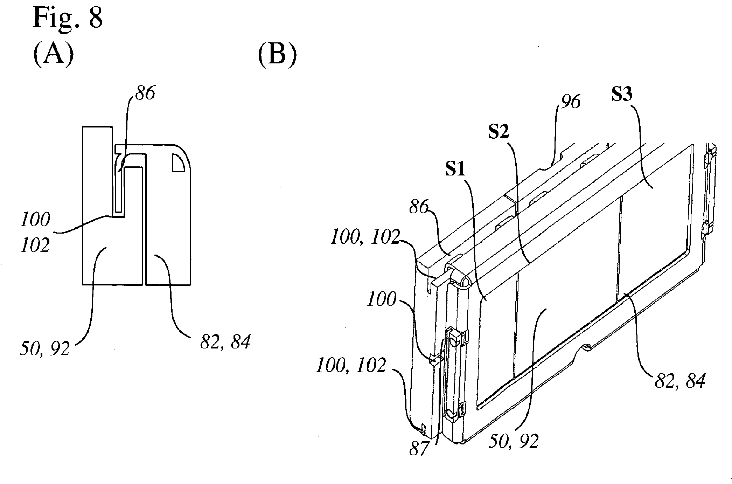

Figuren 8a/b zeigen weitere Ansichten eines Rückenreflektors 50 in einer schwimmenden Halterung 82. Hierbei ist in den Reflektor 50 eine Aussparung 100, insbesondere ein Schlitz 102 o.ä. eingearbeitet, in den mindestens ein Halteelement 86, 87 der Halterung 82 greift. Vorzugsweise weisen alle vier schmalen Seitenflächen des Reflektors 50 entsprechende Aussparungen 100, 102 auf, so dass der Reflektor 50 an allen vier Seiten durch den Rahmen 84 der Halterung 82 gehaltert wird.

Die Aussparungen 100 sind maßlich so bemessen, dass auch bei einer unterschiedlichen Ausdehnung von Reflektor 50 und Halterung 82, immer ein Luftspalt zwischen diesen gegeben ist. Vorzugsweise besteht somit kein oder nur ein geringer Kontakt zwischen dem Reflektor 50 und der Halterung 82.

Der Reflektor 50 wird gegenüber dem Tragrahmen 84 der Halterung 82 in ausreichender Genauigkeit gehaltert, hat aber dennoch in allen drei Raumrichtungen ausreichend Platz für entsprechende Materialveränderungen, so dass der Aufbau von zusätzlichen Spannungen wirksam verhindert wird.

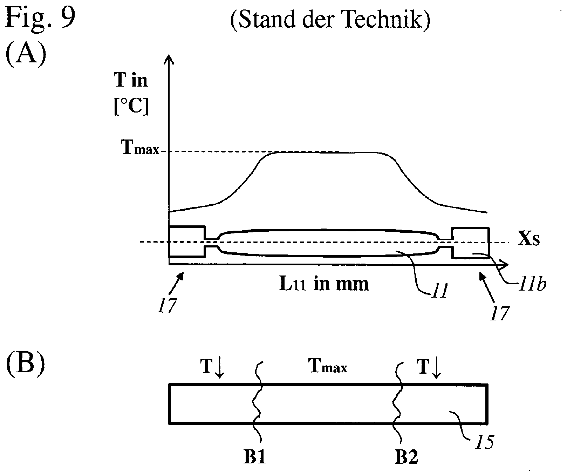

Figuren 9a/b zeigen die Temperaturverteilung in einer Heizgasse entlang einer Strahlerlängsachse XS und einem dahinter angeordneten Reflektor 15 gemäß dem bekannten Stand der Technik. Das Temperaturprofil ist über die Länge L11 des Strahlers 11 ungleichmäßig. Die Länge L11 des Strahlers 11 wird in mm gemessen und so im Graphen dargestellt. An den Strahlerenden 11b ist keine Heizwendel eingearbeitet. Zusätzlich werden diese Bereich 11b mit Kühlluft 17 beaufschlagt, um die Lebensdauer der Strahler 11 zu erhöhen. Dadurch ergibt sich eine maximale Temperatur Tmax im mittleren Bereich des Strahlers 11, die zu den Strahlerenden 11b hin jeweils abnimmt. Die Reflektoren 15 tendieren insbesondere im Bereich des Temperaturanstiegs bzw. -abfalls an den Stellen B1, B2 zu brechen.

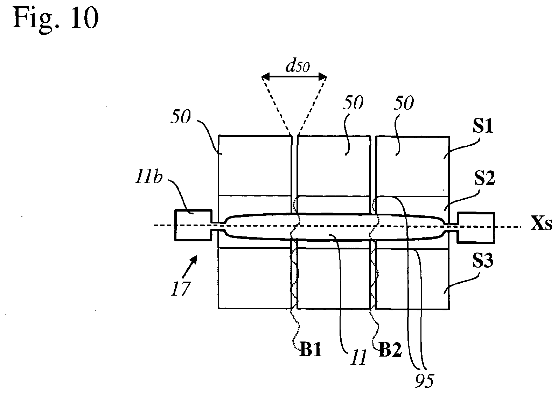

Figur 10 zeigt eine vorteilhafte Anordnung mehrerer Reflektoren 50 hinter einem Strahler 11. Hierbei sind die Reflektoren 50 so angeordnet, dass die Segmente S1, S2, S3 eines Reflektors 50 jeweils übereinander angeordnet sind. Die Größe der Reflektoren 50 wird dabei so gewählt, dass in den Bereichen mit Bruchneigung B1, B2 jeweils ein geringer, minimaler Abstand d50 zwischen zwei benachbarten Reflektoren 50 ausgebildet ist.

Diese so genannte senkrechte Einbaulage der Reflektoren 50 im Vergleich zur Strahlerlängsachse XS ist besonders vorteilhaft, da hier durch die zusätzliche Segmentierung aufgrund der Anordnung mehrerer Reflektoren 50 nebeneinander, der Aufbau zusätzlicher inneren Spannungen über größere Längen des Keramik oder Glasmaterials der Reflektoren 50, die infolge großer Temperaturunterschiede entstehen, weitgehend vermieden wird. Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 1: Heizvorrichtung
- 2: Transportmittel
- 3a: Sägezahnstern / Einlaufstern
- 3b: Auslaufstern
- 4: Heizmodul/Ofen
- 5: Heizstrecke
- 5a/5b: Lineare Heizstrecke
- 6: Umlenkbereich
- 7: Heizkasten
- 8: Heizgasse
- 9: Abschirmplatte
- 10: Kühlschild
- 11: IR-Strahler
- 11b: Strahlerende
- 12: Bodenstrahler
- 13: Gegenreflektor
- 14: Bodenreflektor
- 15: Rückenreflektor
- 16: Vorformlinggreifer / Halterung
- 17: Kühlluft
- 20: Vorformling
- 22: Mündung
- 30: Gegenreflektor
- 50: Rückenreflektor
- 70: Montagevorrichtung
- 72: Einkerbung / Nut
- 80: Halterung
- 82: Halterung
- 84: Rahmen
- 86: Halteelement
- 87: Halteelement
- 90: Kachel
- 92: Kachel
- 95: Nut- Feder- Verbindung
- 96: Aussparung
- 100: Aussparung
- 102: Schlitz

- B1 / B2: Bruchstellen / Stellen mit erhöhter Bruchgefahr
- d1: Abstand zwischen IR- Strahlern und Rückenreflektor
- d2: Abstand zwischen Vorformling und Gegenreflektor
- d50: Abstand zwischen zwei Reflektoren
- S1, S2, S3: Segmente
- X: Längsachse
- XS: Strahlerlängsachse
- F: Förderbewegung

## Patentansprüche

1. Heizvorrichtung (1) zur Erwärmung von Vorformlingen (20), die jeweils einen Mündungsbereich (22) und eine Längsachse (X) aufweisen, vor deren Verarbeitung in einer Streckblasvorrichtung, wobei die Heizvorrichtung (1) eine Heizgasse (8) mit Transportmitteln (2) zur Bewegung der Vorformlinge (20) entlang einer Transportstrecke aufweist, wobei in der Heizgasse (8) eine Mehrzahl von IR-Strahlern (11) angeordnet sind, und wobei den IR-Strahlern (11) mindestens ein Rückenreflektor (50) zugeordnet ist, wobei der mindestens eine Rückenreflektor (50) segmentiert ausgebildet ist **dadurch gekennzeichnet, dass** der mindestens eine Rückenreflektor (50) schwimmend gehaltert ist, wobei der mindestens eine Rückenreflektor (50) aus einem Keramikwerkstoff, einer Glaskeramik oder einem beschichteten Quarzglas besteht, und wobei der mindestens eine Rückenreflektor (50) in einem steifen, verwindungsarmen Rahmen (84) gehaltert ist.

2. Heizvorrichtung (1) nach Anspruch 1, bei der die Einzelsegmente des mindestens einen Rückenreflektors (50) über eine Nut- und Feder- Verbindung (95) miteinander verbunden sind.

3. Heizvorrichtung (1) nach einem der voranstehenden Ansprüche, bei welcher der mindestens eine Rückenreflektor (50) im Bereich eines Strahleranspritzpunktes der IR-Strahler (11) eine Freilegung oder Nut (96) aufweist.

4. Heizvorrichtung (1) nach einem der voranstehenden Ansprüche, wobei auf der den IR-Strahlern (11) gegenüberliegenden Seite der Heizgasse (8) mindestens ein Gegenreflektor (13, 30) angeordnet ist, so dass der Vorformling (20) zwischen den IR-Strahlern (11) und dem mindestens einen Gegenreflektor (13) bewegt wird, wobei der Abstand (d1) zwischen den IR-Strahlern (11) und dem mindestens einen Rückenreflektor (50) und/oder der Abstand (d2) zwischen dem Vorformling (20) und dem mindestens einen Gegenreflektor (30) minimiert ist.

5. Heizvorrichtung (1) nach einem der voranstehenden Ansprüche, wobei der Abstand (d1) zwischen den IR-Strahlern (11) und dem mindestens einen Rückenreflektor (50) maximal 5 mm beträgt.

## Claims

1. Heating device (1) for heating preforms (20) before processing in a stretch blow device, whereby the preforms each comprise a mouth region (22) and a longitudinal axis (X), whereby the heating device (1) comprises a heating alley (8) with transport means (2) for the movement of the preforms (20) along a transport route, whereby a plurality of infra-red emitters (11) is arranged in the heating alley (8), and whereby at least one back reflector (50) is assigned to the infra-red emitters (11), whereby the at least one back reflector (50) is segmented, **characterized in that** the at least one back reflector (50) is arranged in a floating mount, whereby the at least one back reflector (50) is made of a ceramic material, a glass ceramics or a coated quartz glass and / or whereby the at least one filter is made of a coated quartz glass and whereby the at least one back reflector (50) is retained in a rigid, torsion- resistant frame (84).

2. Heating device (1) according to claim 1, whereby the individual segments of the at least one back reflector (50) are connected by a tongue and groove joint (95).

3. Heating device (1) according to one of the preceding claims, whereby the at least one back reflector (50) shows a furrow or groove (96) in the section corresponding to the injection point of the infra-red emitter (11).

4. Heating device (1) according to one of the preceding claims, whereby at least one counter reflector (13, 30) is arranged on the side of the heating alley (8) opposite to the infra-red emitters (11), such that the preform (20) moves between the infra-red emitters (11) and the at least one counter reflector (13), whereby the distance (d1) between the infra-red emitters (11) and the at least one back reflector (50) and / or whereby the distance (d2) between the preform (20) and the at least one counter reflector (30) is minimized.

5. Heating device (1) according to one of the preceding claims, whereby the maximum distance (d1) between the infra-red emitters (11) and the at least one back reflector (50) is up to 5 mm.

## Revendications

1. Dispositif de chauffage (1) pour réchauffer des préformes (20), lesquelles présentent chacune une zone d'embouchure (22) et un axe longitudinal (X), avant qu'elles ne soient transformées dans un dispositif d'étirage-soufflage, le dispositif de chauffage (1) présentant un couloir de chauffage (8) avec des moyens de transport (2) destinés à déplacer les préformes (20) le long d'un trajet de transport, une pluralité de lampes infrarouges (11) étant agencées dans le couloir de chauffage (8) et au moins un rétroréflecteur (50) étant associés aux lampes infrarouges (11), le(s) rétro-réflecteur(s) (50) étant formés segmentés, **caractérisé en ce que** le(s) rétro-réflecteur(s) (50) sont maintenus de manière flottante, le(s) rétro-réflecteur(s) (50) consistant en un matériau céramique, une vitrocéramique ou un verre de quartz enduit, consistant en un verre de quartz et le(s) rétro-réflecteur(s) (50) étant maintenus dans un cadre (84) raide résistant à la torsion.

2. Dispositif de chauffage (1) selon la revendication 1, dans lequel les segments individuels du/des rétro-réflecteur(s) (50) sont reliés les uns aux autres par le biais d'une liaison à rainure et languette (95).

3. Dispositif de chauffage (1) selon l'une quelconque des revendications précédentes, dans lequel le(s) rétro-réflecteur(s) (50) présente(nt) un dégagement ou rainure (96) dans la zone d'un point d'injection des lampes infrarouges (11).

4. Dispositif de chauffage (1) selon l'une quelconque des revendications précédentes, au moins un contre-réflecteur (13, 30) étant agencé sur le côté du couloir de chauffage (8) opposé aux lampes infrarouges (11) de telle sorte que la préforme (20) est déplacée entre les lampes infrarouges (11) et le(s) contre-réflecteur(s) (13), la distance (d1) entre les lampes infrarouges (11) et le(s) rétro-réflecteur(s) (50) et/ou la distance (d2) entre la préforme (20) et le(s) contre-réflecteur(s) (30) étant minimisées.

5. Dispositif de chauffage (1) selon l'une quelconque des revendications précédentes, la distance (d1) entre les lampes infrarouges (11) et le(s) rétro-réflecteur(s) (50) étant de 5 mm au maximum.
